Europäisches Patentamt

European Patent Office

Office européen des brevets

(11) Publication number: **0 002 424**
**B1**

# EUROPEAN PATENT SPECIFICATION

(45) Date of publication of patent specification: 15.07.81

(51) Int. Cl.³: **B 60 R 25/00, B 60 S 9/00**

(21) Application number: **78850020.5**

(22) Date of filing: **29.11.78**

(54) **A locking device for locking a rotatable shaft against rotation.**

(30) Priority: **01.12.77 SE 7713671**

(43) Date of publication of application:
**13.06.79 Bulletin 79/12**

(45) Publication of the grant of the European patent:
**15.07.81 Bulletin 81/28**

(84) Designated Contracting States:
**BE CH DE FR GB NL**

(56) References cited:
**GB - A - 1 456 146**
**GB - A - 1 493 043**
**US - A - 1 530 521**

(73) Proprietor: **GKN-Stenman AB**
**Box 371**
**S-631 05 Eskilstuna (SE)**

(72) Inventor: **Häggström, Ake**
**Granvägen 10**
**S-921 00 Lycksele (SE)**

(74) Representative: **Wennborg, Göte et al,**
**KRANSELL & WENNBORG AB Sandhamnsgatan 42**
**115 28 Stockholm (SE)**

Courier Press, Leamington Spa, England.

A locking device for locking a rotatable shaft
against rotation

It is often desirable to be able to lock a shaft being rotatable relative to an element against rotation with the aid of a simple locking device. One example of this is the supporting legs of a caravan, these legs being activated by means of a rotatable shaft. If this shaft was locked against rotation by means of a locking device, the said supporting legs could be held securely in their supporting position, thereby rendering it impossible to tow the caravan away against the owner's wishes.

An object of the present invention is to provide a simple locking device for the aforesaid purpose.

A further object of the invention is to provide a locking device of the aforementioned type in the form of a robust unit of simple manufacture which permits the use of a standard key-operated cylinder-lock.

In GB patent specification 1 493 043 there is described an assembly preventing unauthorized access to a nut to unscrew the same. The assembly comprises a cover which is freely rotatable relative to the nut. The screw and nut mechanism is driven by a cylinder lock mechanism. Thus, one feature of this previously known mechanism is that the different elements thereof shall be rotatable relative to each other.

In contrast thereto one further important object of the present invention is to keep the rotatable shaft and the said element substantially non-displaceable and non-rotatable relative to each other.

According to the invention there is accomplished a locking device for locking a rotatable shaft against rotation relative to an element, e.g. for locking a shaft through which the supporting legs of a caravan are activated, said locking device comprising a housing having an aperture through which the shaft and an appertaining member, e.g. a nut, non-rotatably mounted on said shaft, can be inserted into the housing, a locking sleeve being displaceable parallel with the shaft between a release position in which the shaft and the said member can be inserted, and a locking position in which the locking sleeve upon insertion of the shaft and said member into the housing engages said member, thereby to lock the shaft against rotation and to prevent the locking device from being withdrawn from the shaft, said locking sleeve further cooperating with a key-operated cylinder lock which, when the cylinder core of said lock and the locking sleeve occupy their locking positions, prevents displacement of the locking sleeve relative to said housing, characterized in that the aperture in the housing is adapted to receive the shaft and the appertaining member in a direction perpendicular to the shaft, the aperture further being of a shape such as to enable said element, e.g. a bearing or carrying element for the shaft, to be inserted into said housing, the locking device, the shaft and the said element in the locking position of the sleeve being kept substantially non-displaceable and non-rotatable relative to each other.

Due to the fact that the aperture permits insertion of the shaft, the appertaining member and the bearing or carrying element in a direction perpendicular relative to the shaft followed by a displacement of the sleeve in the direction of the shaft axis and, finally, locking by means of the locking device easy operation and simple and robust design of the whole device is attained.

In a preferred embodiment of the invention, one end wall of the housing has arranged therein a substantially T-shaped aperture. An aperture of this shape enables a bearing element or carrier element for the shaft and the nut mounted thereon to be readily inserted into the housing.

Conveniently, there is arranged in a wall extending at right angles to said wall a substantially U-shaped aperture for receiving the shaft.

When the locking device comprises a separate article it is immaterial whether the housing of the locking device is mounted onto the shaft and, when provided, the carrier element, or whether the shaft and said element are inserted into the housing.

The shape and design of the housing and the locking sleeve arranged in said housing may vary in dependence upon the type of cylinder lock used with the locking device.

In one embodiment the core or barrel of the cylinder lock is mounted on the locking sleeve and has a latch element arranged to enter a recess in a respective wall of the locking sleeve and housing, said recesses being in register with one another when the locking sleeve occupies its locking position.

In this embodiment there is used a cylinder lock whose barrel has arranged thereon a rotatable catch element which is moved to a latching position when the key is rotated.

To prevent the locking sleeve from being removed unintentionally from the housing, the housing is preferably provided with a stop means for the cylinder lock.

In an alternative embodiment, in which there is used a cylinder lock having a cylinder core or barrel which is rotated and moved axially when activated by a key, the cylinder lock is instead mounted at the housing, the displaceable cylinder core being joined to the locking sleeve instead, via an element such as a peg. When the cylinder core or barrel is moved to its locking position, by turning the key, the said element, e.g. the peg, is movable relative to the locking sleeve such that said locking sleeve is unable to rotate.

In this latter embodiment, the locking sleeve is of shorter length axially, whilst the housing has a greater length axially, owing to the fact that the cylinder lock will constitute a part of said housing.

So that the invention will be more readily understood and optional features thereof made apparent, two exemplary embodiments of the invention will now be described in more detail with reference to the accompanying schematic drawing.

Figure 1 is a perspective view of a first embodiment of a locking device according to the invention.

Figure 2 is a sectional view of the locking device shown in Figure 1.

Figure 3 is a sectional view of an alternative embodiment of the locking device.

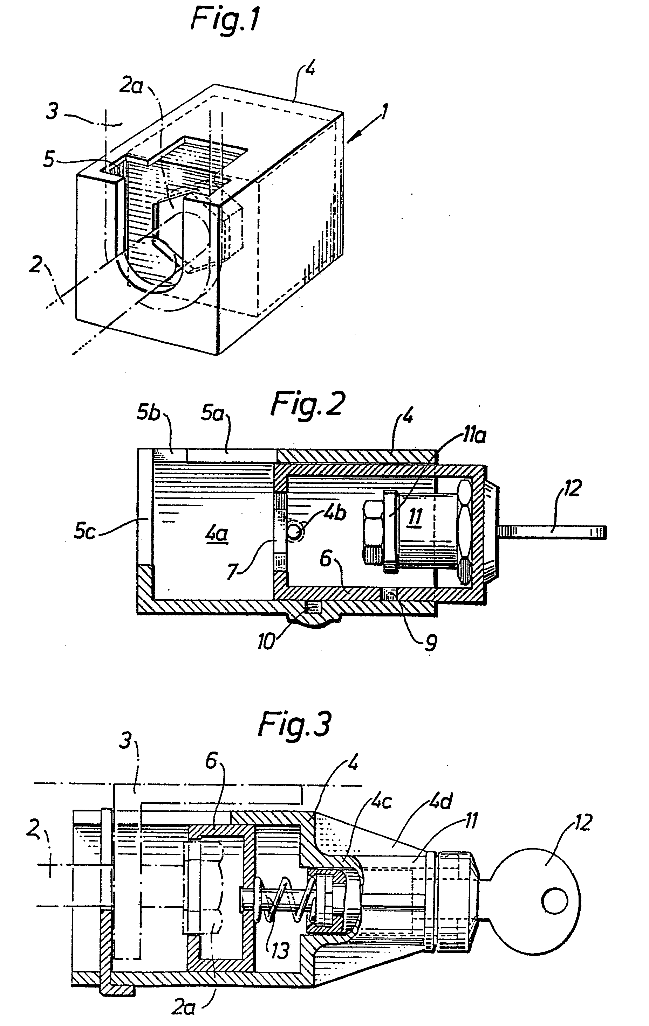

A locking device 1 is intended to lock a rotatable shaft against rotation. The shaft is shown in phantom lines in Figure 1 and is identified by the reference 2 and may be arranged to activate the supporting legs of a caravan. Thus, the shaft may form part of a jack arrangement of such construction that when the shaft is rotated the legs of a caravan are moved to an active supporting position. When the shaft is locked against rotation, it is impossible to steal the caravan by towing the same away, since the supporting legs of the caravan are locked in their active supporting position.

The shaft 2 is carried in a bearing or carrying part 3, also shown in phantom lines in Figure 1.

The locking device 1 is of parallelepipedic configuration and comprises an outer housing 4 having an internal space 4a in which a locking sleeve 6 is displaceably movable. Arranged in the upper wall of the housing 4 is the T-shaped apertures 5a, 5b, through which the shaft 2, and a nut 2a fixed thereto, and said carrying or bearing element 3, can be inserted into said housing.

An aperture 5c through which the shaft 2 can be passed is arranged in the leading wall of the housing, said leading wall extending at right angles to said upper wall.

The sleeve 6, which is axially displaceable in the housing 4 towards the shaft, has a forward aperture 7 which is hexagonal in shape and which is arranged to embrace the nut 2a, in a manner such as to lock the shaft against rotation.

The locking sleeve 6 can be locked in said locking position by means of a cylinder lock 11 mounted to the housing as shown, said cylinder lock 11 being operated by means of a key 12. The cylinder lock 11 has a pivotable latch element 11a arranged to latch the locking sleeve in the locking position. In this position a recess or aperture 9 in the lower wall of the locking sleeve is aligned with a recess or aperture 10 in the lower wall of the housing 4. When the key 12 is rotated, the latching element 11a will thus be moved into the recesses or apertures 9, 10, thereby to lock the locking sleeve to the housing.

It is then impossible to remove the locking device from the shaft, since relative movement vertically between the parts is prevented, whilst lateral movement of the locking housing is prevented by the carrying or bearing element 3.

To prevent the locking sleeve 6 from being removed from the lock housing 4, e.g. when the locking device is not being used, there is arranged in the housing 4 a locking element 4b which is arranged to co-operate with the locking sleeve to hold the same in said housing.

Figure 3 illustrates an alternative embodiment in which there is used a cylinder lock having an axially displaceable cylinder core or barrel which can be rotated to a locking position. The cylinder lock in Figure 3 is also referenced 11 and, in this case, is mounted to the housing which, to this end, has a cylindrical, outwardly projecting part 4c which is reinforced by ribs or flanges 4d.

The core of the cylinder lock is joined to the locking sleeve 6 through a peg 13, the length of the locking sleeve 6 being shorter in this embodiment than in the previous embodiment. The peg 13 is preferably rotatable in the locking sleeve 6.

The function of the two locking devices is substantially the same. Thus, the locking sleeve 6 of the Figure 3 embodiment will also prevent rotation of the nut 2a, and therewith the shaft 2, whilst the L-shaped carrying element 3 contributes to preventing the locking device from being removed as a whole.

Other modifications are possible within the scope of the inventive idea as defined in the following claims.

## Claims

1. A locking device for locking a rotatable shaft against rotation relative to an element, e.g. for locking a shaft through which the supporting legs of a caravan are activated, said locking device (1) comprising a housing (4) having an aperture (5) through which the shaft (2) and an appertaining member (2a), e.g. a nut, non-rotatably mounted on said shaft, can be inserted into the housing, a locking sleeve (6) being displaceable parallel with the shaft between a release position in which the shaft and the said member can be inserted, and a locking position in which the locking sleeve (6) upon insertion of the shaft and said member into the housing engages said member (2a), thereby to lock the shaft against rotation and to prevent the locking device from being withdrawn from the shaft, said locking sleeve (6) further cooperating with a key-operated cylinder lock (11) which, when the cylinder core of said lock and the locking sleeve occupy their locking positions, prevents displacement of the locking sleeve relative to said housing, characterized in that the aperture (5) in the housing is adapted to receive the shaft (2) and the appertaining member in a direction perpendicular to the shaft, the aperture (5) further being of a shape such as to enable said element, e.g. a bearing or carrying element (3) for the shaft, to be inserted into said housing (4), the locking device (1), the shaft (2) and the said element (3) in the locking position of the sleeve (6) being held substantially non-displaceable and non-rotatable relative to each other.

2. A locking device according to claim 1, characterized in that one wall of the housing has a substantially T-shaped aperture (5a, 5b).

3. A locking device according to claim 2, characterised in that the housing (4) in a wall extending at right angles to said one wall has a substantially U-shaped aperture (5c) for said shaft (2).

4. A locking device according to any one of claims 1—3, characterized in that the locking cylinder (11) is mounted on the locking sleeve (6) and has a latch element (11a) arranged to be received in recesses or apertures (9; 10) in the locking sleeve (6) and the housing (4), respectively, said apertures or recesses being aligned with one another when the locking sleeve occupies its locking position.

5. A locking device according to anyone of claims 1—3, characterized in that the housing (4) has a stop means (4b) for preventing withdrawal of the locking sleeve (6) from the housing (4).

6. A locking device according to anyone of claims 1—3, characterized in that the cylinder lock (11) is mounted to the housing (4) and has an axially displaceable and a rotatable core, said core being joined to the locking sleeve (6) through an element (13).

## Revendications

1. Dispositif de verrouillage pour verrouiller un arbre rotatif contre toute rotation par rapport à un élément, par, exemple, pour verrouiller un arbre par l'intermédiaire duquel sont actionnées des béquilles d'une caravane, ce dispositif de verrouillage (1) étant du type comprenant un boîtier (4) ayant une ouverture (5) à travers laquelle l'arbre (2) et un organe (2a) qui en est solidaire par exemple un écrou monté non rotatif sur cet arbre, peuvent être introduits dans le boîtier, un manchon de verrouillage (6) pouvant se déplacer parallèlement à l'arbre entre une position de déverrouillage dans laquelle l'arbre et ledit organe solidaire de celui-ci peuvent être introduits et une position de verrouillage dans laquelle le manchon de verrouillage (6), après l'introduction de l'arbre et dudit organe dans le boîtier, coopère avec cet organe (2a), de manière à verrouiller l'arbre contre toute rotation et à empêcher le dispositif de verrouillage d'être séparé de l'arbre, ledit manchon de verrouillage (6) coopérant en outre avec une serrure à barillet (11) actionnée par une clé qui, lorsque le barillet de cette serrure et le manchon de verrouillage se trouvent dans leurs positions de verrouillage, empêche de déplacement du manchon de verrouillage par rapport au boîtier, dispositif caractérisé en ce que l'ouverture (5) du boîtier est adaptée pour recevoir l'arbre (2) et l'organe qui en est solidaire dans une direction perpendiculaire à l'arbre, l'ouverture (5) ayant en outre une forme appropriée pour permettre d'introduire ledit élément, par exemple un palier ou un support (3) pour l'arbre dans ledit boîtier (4), le dispositif de verrouillage (1), l'arbre (2) et ledit élément (3) étant maintenus à peu près immobilisés et non rotatifs l'un par rapport à l'autre dans la position de verrouillage du manchon.

2. Dispositif de verrouillage suivant la revendication 1, caractérisé en ce qu'une paroi du boîtier présente une ouverture (5a, 5b) à peu près en forme de T.

3. Dispositif de verrouillage suivant la revendication 2, caractérisé en ce que le boîtier (4) présente, dans une autre paroi qui s'étend à angle droit par rapport à ladite paroi, une ouverture (5c) à peu près en forme de U pour recevoir l'arbre (2).

4. Dispositif de verrouillage suivant l'une quelconque des revendications 1 à 3, caractérisé en ce que la serrure (11) à barillet est montée sur le manchon de verrouillage (6) et comporte un verrous (11a) agencé pour être reçu dans des cavités ou ouvertures (9, 10) du manchon de verrouillage (6) et du boîtier (4) respectivement, lesdites ouvertures ou cavités étant alignées l'une avec l'autre lorsque le manchon de verrouillage occupe sa position de verrouillage.

5. Dispositif de verrouillage suivant l'une quelconque des revendications 1 à 3, caractérisé en ce que le boîtier (4) comporte une butée (4b) pour empêcher de retirer le manchon de verrouillage (6) du boîtier (4).

6. Dispositif de verrouillage suivant l'une quelconque des revendications 1 à 3, caractérisé en ce que la serrure (11) à barillet est montée sur le boîtier (4) et comporte un barillet rotatif mobile dans la direction axiale, ce barillet étant au manchon de verrouillage (6) par l'intermédiaire d'une pièce (13).

## Patentansprüche

1. Blockiervorrichtung zum Blockieren einer drehbaren Welle gegen Verdrehung relativ zu einem Element, insbesondere zur Blockierung einer Welle durch welche die Stützbeine eines Caravanwagens betätigbar sind, die Blockiervorrichtung (1) ein Gehäuse (4) enthält, mit einer Oeffnung (5) durch welche die Welle (2) und ein zugehöriger Teil (2a), insbesondere eine Schraubenmutter, die nichtdrehbar auf der Welle sitzt, in das Gehäuse eingesetzt werden kann, eine Sperrhülse (6) die parallel zur Welle verschiebbar ist zwischen einer entriegelten Position in welcher die Welle mit zugehörigem Teil eingesetzt werden kann und einer Blockierposition in welcher die Sperrhülse (6) nach dem Einsetzen der Welle und des zugehörigen Teiles im Gehäuse den zugehörigen Teil (2a) erfasst, dadurch die Welle gegen Verdrehung sichert und ein Abziehen der Blockiervorrichtung von der Welle verhindert, die Sperrhülse (6) ferner mit einem schlüsselbetätigbaren Zylinderschloss (11) zusammenwirkt, welche eine Verschiebung der Sperrhülse (6) relativ zum Gehäuse (4) verhindert, wenn der Rotor ihre Blockierposition einnehmen, dadurch gekennzeichnet, dass die Oeffnung (5) im Gehäuse zur Aufnahme der Welle (5) und den besagten zugehörigen Teil in Richtung rechtwinklig zur Welle ausgebildet ist, die Oeffnung (5) ferner eine solche Form hat, welche dem besagten Element, insbesondere einem tragenden oder stützenden Element (3) der Welle, das Einschieben in das Gehäuse (4) erlaubt, die Blockiervorrichtung (1), die Welle (2) und das besagte Element (3) in der Blockierposition der Sperrhülse (6) in einer im wesentlichen nichtverschiebbaren und nicht-drehbaren Relativlage zueinander gehalten sind.

2. Blockiervorrichtung nach Patentanspruch 1, dadurch gekennzeichnet, dass eine Wand des Gehäuses eine im wesentlichen T-förmige Oeffnung (5a, 5b) hat.

3. Blockiervorrichtung nach Patentanspruch 2, dadurch gekennzeichnet, dass das Gehäuse (4) in der einen Wand eine sich zu dieser Wand rechtwinklig erstreckende, im wesentlichen U-förmige Oeffnung (5c) für die Welle hat.

4. Blockiervorrichtung nach einem der Patentansprüche 1—3, dadurch gekennzeichnet, dass das Zylinderschloss (11) auf der Sperrhülse (6) montiert ist und einen Riegel (11a) aufweist der so angeordnet ist, dass er in einen Durchbruch oder in eine Ausnehmung (9; 10) der Sperrhülse (6) bzw. des Gehäuses (4) eingreifen kann, wobei der Durchbruch und die Ausnehmung eine übereinstimmende Lage einnehmen, wenn sich die Sperrhülse (6) in ihrer Blockierlage befindet.

5. Blockiervorrichtung nach einem der Ansprüche 1—3, dadurch gekennzeichnet, dass sich im Gehäuse (4) ein Anschlag (4b) befindet, um das Herausziehen der Sperrhülse (6) aus dem Gehäuse (4) zu verhindern.

6. Blockiervorrichtung nach einem der Ansprüche 1—3, dadurch gekennzeichnet, dass das Zylinderschloss (11) im Gehäuse (4) montiert ist und einen axial verschiebbaren und drehbaren Rotor aufweist, der mit der Sperrhülse (6) durch ein Element (13) verbunden ist.

0 002 424

**Fig.1**

**Fig.2**

**Fig.3**